(19) Europäisches Patentamt
European Patent Office
Office européen des brevets

(11) **EP 1 898 533 B1**

(12) **EUROPEAN PATENT SPECIFICATION**

(45) Date of publication and mention
of the grant of the patent:
**25.08.2010 Bulletin 2010/34**

(51) Int Cl.:
***H04B 5/02*** *(2006.01)*

(21) Application number: **07253409.2**

(22) Date of filing: **29.08.2007**

(54) **Radio-frequency detection system for a medical apparatus and method**

Funkfrequenzerkennungssystem für eine medizinische Vorrichtung und entsprechendes Verfahren

Système de détection de radio-fréquence pour appareil médical et procédé

(84) Designated Contracting States:
**DE FR GB SE**

(30) Priority: **07.09.2006 DE 102006041914**

(43) Date of publication of application:
**12.03.2008 Bulletin 2008/11**

(73) Proprietor: **Dräger Medical AG & Co. KG
23558 Lübeck (DE)**

(72) Inventors:
• **Schermeier, Olaf
23560 Lübeck (DE)**
• **Steeger, Markus
23564 Lübeck (DE)**

(74) Representative: **Greenwood, John David et al
Graham Watt & Co LLP
St Botolph's House
7-9 St Botolph's Road
Sevenoaks
Kent TN13 3AJ (GB)**

(56) References cited:
**DE-U1-202005 013 779    US-A- 4 751 516
US-A1- 2006 055 542**

## Description

The invention relates to a radio-frequency detection system, in particular for a medical apparatus, with at least two radio-frequency detection devices, which each has an aerial with a detection range for radio-frequency marking. The radio-frequency detection devices are each designed to detect the radio-frequency marking and marking information made available by the latter in the detection range.

With radio-frequency detection systems with a plurality of aerials known from the prior art, wherein one of the plurality of aerials is assigned in each case to at least one radio-frequency detection device, a problem arises that a spatial or local separation of detection ranges of aerials adjacent to another is possible only by providing resonance frequencies differing from one another and thus by providing frequency channels differing from one another in the carrier frequency range.

US-A-2006/0055542 discloses an RFID device which includes an antenna structure that provides good performance throughout a range of different positions relative to nearby materials, such as metallic objects in a carton or other container. The antenna structure has compensation elements that interact with the nearby materials to provide good performance over the range of different positions. The compensation elements include both electrical compensation elements, which interact with the nearby materials primarily using electric fields, wand magnetic compensation elements, which interact with the nearby materials primarily using magnetic fields. The electrical compensation elements and the magnetic compensation elements may be selected and may be positioned within the antenna structure such that the performance of the antenna structure is substantially unchanged (or at least acceptable) through the range of different positions.

There is known from DE 20 2005 013 779 U1 a device having the features of the preambles of claims 1 and 8, ie a device for communication with transponders by means of near-field aerials, wherein a spatial or local separation of detection rangers and thus an unequivocal assignment of detected transponders to a detecting aerial is achieved by short-circuiting aerials adjacent to a detecting aerial. By short-circuiting the adjacent near-field aerial, a magnetic field is generated according to the teaching of DE 20 2005 on3 779 U1 and according to the Biot-Savart law of induction, said magnetic field being in the opposite direction to the field which has been generated by the detecting radio-frequency detection device by means of the detecting aerial. According to the teaching of DE 20 2005 013 779 U1, the short-circuiting brings about a spatial delimitation of a detection range of a detecting, actively supplied near-field aerial. A transponder outside the detection range could, without the short-circuiting of an adjacent, passive aerial, still possibly be supplied with sufficient near-field energy for communication and could thus interfere with a communication in the intended detection range.

The problem addressed by the present invention, therefore, is to provide a radio-frequency detection system which enables an improved spatial or local delimitation of a detection range of a detecting aerial.

Accordingly, there is provided a radio-frequency detection system as claimed in the claims. In particular the radio-frequency detection system is designed to weaken a detection range of a detecting radio-frequency detection device, in particular a detection range of a detecting radio-frequency detection device extended or amplified by induction in at least one other detection range, in the detection range of the at least one other radio-frequency detection device, in such a way that a radio-frequency marking cannot be detected by the detecting radio-frequency detection device in the detection range of the at least one other radio-frequency detection device.

For this purpose, the radio-frequency detection system can be designed to weaken or suppress a magnetic near field forming the detection range of the detecting radio-frequency detection device in the detection range of the at least one other detection device. To advantage, a radio-frequency marking cannot therefore modulate the magnetic near field and cannot therefore also be detected.

In a preferred embodiment, the radio-frequency detection system comprises a compensating element, which is designed to generate a magnetic opposing field by means of the at least one other aerial in the at least one other detection range, which opposing field weakens or suppresses the magnetic field of the detecting aerial in the at least one other detection range. To advantage, the magnetic near field of the detecting aerial can thus be actively weakened or suppressed. To advantage, the radio-frequency detection devices can thus work with the same resonance frequency. An active suppression can in particular take place by feeding a compensating current by means of the compensating element into the at least one other aerial. A further advantage over a passive, short-circuiting of the other aerial results from the fact that short-circuiting is associated with losses at an ohmic resistance of the other aerial and thus also a magnetic opposing field thereby generated whose field strength, in particular, is limited. An actively generated opposing field can be generated with virtually any strength, even beyond a natural detection range of the other aerial. For this purpose, the compensating element is preferably designed to feed a compensating current into the at least one other aerial, and thus to generate a magnetic opposing field by means of the at least one other aerial in the at least one other detection range, which opposing field weakens or suppresses the magnetic field of the detecting aerial in the at least one other detection range.

Such a compensating element can for example be designed to generate a counter-voltage with a voltage characteristic in phase opposition to a voltage characteristic of a voltage dropping over the detecting aerial and in particular to comprise for this purpose a voltage source.

To advantage, the compensating element can for this purpose comprise an amplifier which is connected at the input side to the detecting aerial and at the output side to the at least one other aerial and is designed to generate a compensating current in phase opposition to the current of the detecting aerial.

To advantage, a mutually induced alternating current generated in the at least one other aerial can be suppressed or weakened.

In a preferred embodiment, the compensating element comprises a compensating inductor or is a compensating inductor. First connections of the aerials of the radio-frequency detection system are also preferably connected by means of the compensating element. Also to advantage, two connections of the aerials each have the same potential and are preferably connected to one another galvanically. To advantage, a mesh with inductors can thus be formed, via which a current suitable for the compensation can be fed into the other aerial.

The compensating element is preferably designed so as to generate, in respect of a magnetic flux generated by the detecting aerial in the range of the at least one other aerial, a magnetic flux in the opposite direction to said magnetic flux by means of a compensating current and thus to weaken or compensate for the magnetic field of the detecting aerial.

To advantage, it is thus possible by means of the at least one other aerial to generate a magnetic field which is in the opposite direction to a detecting magnetic field generated by the detecting aerial and to suppress or weaken the latter at least partially, in a local region. By means of the embodiments described above, a radio-frequency marking which is located in the region of the magnetic field in the opposite direction generated by the compensating element can, to advantage, not be detected.

In a preferred embodiment, the compensating element is designed to generate a self-induced voltage directed opposite to a mutually induced voltage generated by mutual inductance in the at least one other aerial, in such a way that the self-induced voltage and the mutually induced voltage at least partially or completely eliminate one another. To advantage, a magnetic field of the detecting aerial can thus be suppressed or weakened.

The compensating element, in particular the compensating inductor, is preferably designed in such a way that the voltage characteristic of a voltage dropping over the compensating inductor and a voltage dropping over the detecting aerial are identical to one another in terms of quantity and phase. To advantage, a voltage dropping over the at least one other aerial is eliminated.

Another embodiment of a radio-frequency detection device is also conceivable with a compensating element which comprises a compensating capacitor or is a compensating capacitor. To advantage, a parasitic voltage fed capacitively into the aerial can thus be compensated for.

The invention also relates to a method for diminishing a detection range in a detection system, wherein a detecting aerial with an active detection range and at least one other aerial with a passive detection range are coupled with one another inductively in particular by cross-talk and wherein the active detection range is extended into the passive detection range.

With the method, the active detection range extended into the passive detection range is preferably weakened or suppressed, in particular actively, in the passive detection range, in such a way that a marking arranged in the passive detection range, in particular a radio-frequency marking, cannot be detected by the detecting aerial.

The active detection range is preferably formed by a magnetic field, and is weakened or suppressed in the region of the passive detection range by a magnetic field in the opposite direction to the magnetic field. The magnetic field in the opposite direction is also preferably generated by current generated to operate the detecting aerial.

Particularly preferably, a compensating current can be fed into the other aerial by means of the compensating element, by means of which compensating current a magnetic field at least partially compensating for the magnetic near field of the detecting aerial can be generated.

In a preferred embodiment of the method, a compensating inductor is formed by the detecting aerial and a mesh is formed by the at least one other aerial, whereby the mesh current is determined by the compensating inductor in such a way that a mutually induced voltage generated by mutual inductance is eliminated.

A magnetic field can thus even be self-induced in the at least one other aerial, said magnetic field eliminating a mutually induced magnetic field generated by the detecting aerial.

The previously described radio-frequency detection system and the previously described method each have the advantage that the other radio-frequency detection device can also be operated actively, whereas an active operation of the other radio-frequency detection device is not possible with a method in which the other aerial of the other radio-frequency detection device is short-circuited. By means of the compensating element, a simultaneous operation of radio-frequency detection devices of a radio-frequency detection system with aerials adjacent to one another and detection ranges in each case overlapping one another can be enabled, without losing a spatial resolution due to overlapping of the detection ranges.

A further advantage is to be seen in the embodiment without switching elements. The use of switching elements, such as relays or transistors, for short-circuiting the aerial is absolutely essential for the variant described in DE 20 2005 013 779 U1. The switching element itself, but also the control lines, the switching electronics and where appropriate the software increase the system complexity and the system costs markedly. The variant described here is almost cost-neutral due to the use of standard components on the aerial circuitry.

The invention also relates to a medical apparatus with a radio-frequency detection system of the aforementioned kind. To particular advantage, a detection range for a tube connection can be limited in the case of a respiratory apparatus which has at least two connections for in each case one respiratory tube.

A medical apparatus can be a respiratory apparatus, an anaesthetic apparatus or a respiratory monitor.

The medical apparatus can be designed to detect a radio-frequency marking in the region of a tube connection. To advantage, it can thus be ensured that a respiratory tube is connected to the medical apparatus. Also to advantage, it can be ensured that a correct tube type is connected to the medical apparatus. For this purpose, a respiratory tube can have a radio-frequency marking in the region of an end.

A radio-frequency detection device and a radio-frequency marking can operate, for example for the transmission of a marking signal representing marking information, with one of the following modulation methods or with a combination of the following modulation methods:

- FM (FM = frequency modulation);
- AM (AM = amplitude modulation);
- FSK (FSK = frequency shift keying);
- ASK (ASK = amplitude shift keying);
- PSK (PSK = phase shift keying).

Advantageous frequencies for the detection of a radio-frequency marking are in the range between 100 kilohertz and 350 kilohertz, in particular 125 kilohertz, in the range between 1 megahertz and 20 megahertz, in particular 13.56 megahertz.

Further advantageous variants of embodiment emerge from the features described in the dependent claims or a combination of the latter.

An embodiment of the present invention will now be described, by way of example only, with reference to the accompanying drawings of which

Figure 1 is a schematic diagram of an example of embodiment of a radio-frequency detection system with two radio-frequency detection devices and a compensating element;

Figure 2 is a schematic diagram an example of embodiment of a radio-frequency detection system with three radio-frequency detection devices and three compensating elements.

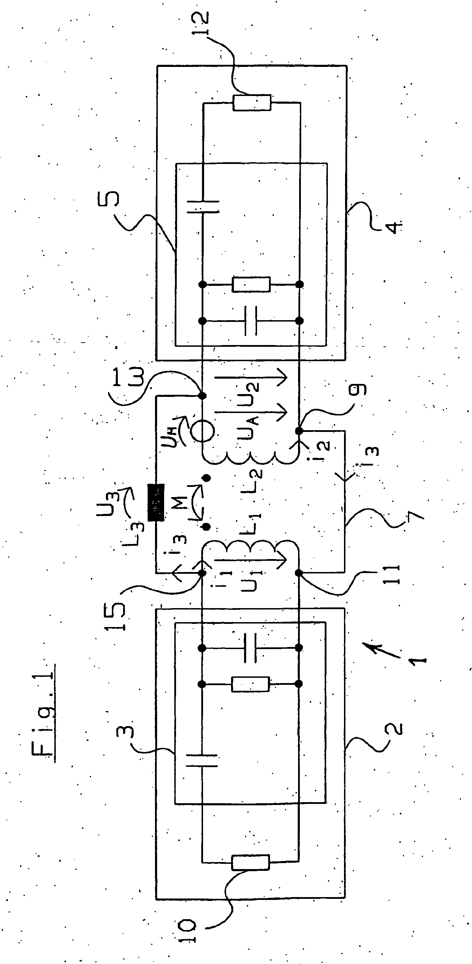

Figure 1 shows schematically an example of embodiment of a radio-frequency detection system 1. Radio-frequency detection system 1 comprises a radio-frequency detection device 2 and a radio-frequency detection device 4. Radio-frequency detection device 2 has an equalising element 3 and an aerial $L_1$ connected to equalising element 3. Equalising element 3 is connected at the input side to a transmitter 10 for generating a radio-frequency signal with a radio-frequency current. Radio-frequency detection device 4 comprises an equalising element 5 and a transmitter 12 for generating a radio-frequency signal with a radio-frequency current. Equalising element 5 is connected at the output side to an aerial $L_2$ and at the input side to transmitter 12.

Radio-frequency detection system 1 also comprises a compensating element $L_3$. Compensating element $L_3$ is designed as an inductor, whereby a first connection of compensating element $L_3$ is connected via a connecting node 15, in particular in the region of a first end of aerial $L_1$, to aerial $L_1$. A second connection of compensating element $L_3$ is connected via a connecting node 13, in particular in the region of a first end of aerial $L_2$, to aerial $L_2$. Aerials $L_1$ and $L_2$ are connected galvanically to one another in each case at least indirectly. In this example of embodiment, aerial $L_1$ is connected via a connecting node 11, a connecting line 7 and a connecting node 9 to aerial $L_2$.

The mode of operation of system 1 is described below:

Transmitter 10 is designed to generate a radio-frequency signal and to send the latter via equalising element 3 to aerial $L_1$. A radio-frequency current of the radio-frequency signal sent to aerial $L_1$ is denoted by $i_1$. A voltage $U_1$ generated by induction thus drops over aerial $L_1$. The magnetic near field generated by aerial $L_1$ forms a detection range for a radio-frequency marking and permeates the detection range of aerial $L_2$. Aerials $L_1$ and $L_2$ are now inductively coupled together. A mutual inductance M is also represented, which characterises an impedance of the magnetic flux which couples aerial $L_1$ and aerial $L_2$ to one another. The coupling magnetic field permeating aerial $L_2$ generates a parasitic current $U_M$ proportional to mutual inductance M. If radio-frequency detection devices 2 and 4 are each tuned to the same resonance frequency via equalising elements 3 and 5 respectively, a field increase can be formed in the detection range of aerial $L_2$, said increase being generated by parasitic voltage $U_M$. A radio-frequency marking can thus be detected to a greater extent in the detection range of aerial $L_2$, since field lines, which without the presence of aerial $L_2$ run in the edge region of the detection range of aerial $L_1$, are concentrated in the range of aerial $L_2$ and thus form a locally increased magnetic field strength.

Radio-frequency detection device 2 is designed to detect a transmitting power outputted by transmitter 10, in particular by means of a demodulator, and thus to detect a change in the magnetic near field generated by aerial $L_1$, said change being brought about by load modulation of a radio-frequency marking. By means of aerial $L_1$, coupling element $L_3$ connected via connecting node 15 and aerial $L_2$ connected via connecting node 13 and connecting line 7 connected via connecting nodes 9 and

11 to aerial $L_1$, a mesh is formed in which a current $i_3$ flows as part of the radio-frequency signal emitted by transmitter 10.

Mesh current $i_3$ thus formed generates in aerial $L_2$, in particular by self-induction, an active induction voltage $U_A$, which is directed in the same direction as a voltage $U_2$ dropping over aerial $L_2$. Voltage $U_2$ thus results as the sum of a self-induction voltage, generated by current $i_2$, a voltage $U_M$ generated by mutual inductance M as a function of current $i_1$ and voltage $U_A$ generated by induction of current $i_3$ in aerial $L_2$. Current $i_3$ generates in aerial $L_2$ a magnetic opposing field, which suppresses or weakens the magnetic near field of aerial $L_1$ in the detection range of aerial $L_2$.

According to a mesh relationship

$$- U_1 + U_3 + U_2 = 0,$$

voltage $U_2$ dropping over aerial $L_2$ is precisely compensated for when voltage $U_1$ dropping over aerial $L_1$ and voltage $U_3$ dropping over compensating inductor $L_3$ each have an identical amount, i.e. condition $U_1 = U_3$ is met. Compensation element $L_3$ satisfies this condition if its inductance amounts to

$$L_3 = \sqrt{(L_1 \times L)_2} / M$$

Instead of mutual inductance M, use can be made of coupling factor k, wherein compensating element $L_3$ can be represented as follows with $M = k\sqrt{(L_1 \times L)_2}$ :

$$L_3 = \sqrt{(L_1 \times L)_2} / k \cdot$$

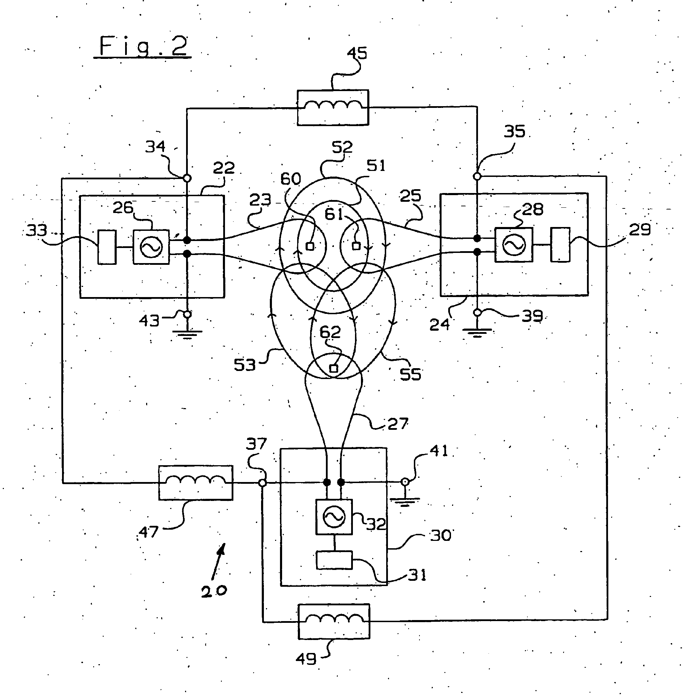

Figure 2 shows an example of embodiment of a radio-frequency detection system 20. Radio-frequency detection system 20 comprises a radio-frequency detection device 22, a radio-frequency detection device 24 and a radio-frequency detection device 30. Radio-frequency detection device 22 comprises an aerial 23, radio-frequency detection device 24 comprises an aerial 25 and radio-frequency detection device 30 comprises an aerial 27. Radio-frequency detection device 22 comprises a transmitter 26, which is connected at the output side to aerial 23.

Radio-frequency detection device 24 comprises a transmitter 28, which is connected at the output side to aerial 25. Radio-frequency detection device 30 comprises a transmitter 32, which is connected at the output side to aerial 27. Transmitters 26, 28 and 32 are each designed to generate a radio-frequency current.

Aerials 23, 25 and 27 are each designed, depending on a radio-frequency current flowing through the aerial, to generate a correspondingly formed magnetic near field with a detection range for a radio-frequency marking.

In the case of an aerial designed loop-shaped, for example formed by a circularly shaped wire loop, a detection range is formed at least in loop sections corresponding to the shape of a torus and encloses the aerial at least in sections.

A field line 51 of the magnetic near field generated by aerial 23 is represented. A radio-frequency marking 60 is arranged in the detection range of aerial 23. Radio-frequency marking 60 is designed for the load modulation of a magnetic near field. The magnetic near field generated by aerial 23 experiences, through the modulation thus generated, a change in flux which brings about a reaction on transmitter 26.

Transmitter 26 is connected to a detection device 33, which has a demodulator. Detection device 33 is designed to detect the load modulation of the magnetic near field generated by radio-frequency marking 60 and to generate a marking signal, which corresponds to marking information represented by radio-frequency marking 60.

Radio-frequency marking 61, which is located in the detection range of aerial 25, is also represented. Radio-frequency marking 61 is also located in the detection range of aerial 23, so that the magnetic near field generated by aerial 23 could also be modulated by radio-frequency marking 61. A field line 52 of the detection range of aerial 25 is also represented.

Radio-frequency marking 61 is detected in the case of a radio-frequency current generated by transmitter 28, which current flows through aerial 25. Field line 52 also passes through the detection range of aerial 23, so that radio-frequency marking 60 arranged in the detection range of aerial 23 could also be detected by aerial 25. Transmitter 28 is connected to a detection device 29, which is designed corresponding to detection device 33.

Radio-frequency detection device 22 has a connection 34 for the connection to a compensating element, which is connected to transmitter 26 and to a first connection of aerial 23. Connection 34 is connected via a compensating element 45 to a connection 35 for the connection of a compensating element of radio-frequency detection device 24. Connection 35 is connected to a first connection of aerial 25. A second connection of aerial 25 is connected to a connection 39 of radio-frequency detection device 24, the connection 39 being connected to a common potential of radio-frequency detection system 20. A second connection of aerial 23 is connected to a connection 43 of radio-frequency detection device 22. Connection 43 is connected to the common potential of radio-frequency detection system 20. Compensating element 45 comprises an inductor.

A radio-frequency current generated by transmitter 26 can thus flows at least partially via connection 34, compensating element 45, connection 35, through aerial 25 and via connection 39, also via the common potential and via connection 43 to transmitter 26. The current flowing via compensating element 45 and aerial 25 generates a magnetic opposing field in the detection region of aerial 25, which can weaken or suppress the magnetic near field generated by aerial 23 in the detection range of aerial 25. Radio-frequency marking 61, which is located in the detection range of aerial 25, cannot therefore be detected by the magnetic near field generated by aerial 23.

When transmitter 28 is active, and sends a radio-frequency current through aerial 25, a field line 52 of the magnetic near field generated by aerial 25 runs through the detection range of aerial 23. Radio-frequency marking 60 arranged in the detection range of aerial 23 could thus also be detected by the magnetic near field of aerial 25. Aerial 23, however, is connected via connection 35 and compensating element 45 via connection 34 and via the common potential via connections 39 and 43 to transmitter 28, so that a radio-frequency current generated by transmitter 28 flows through aerial 23. There can thus be generated in the detection range of aerial 23 a magnetic opposing field, which weakens or suppresses the magnetic near field of aerial 25 in the region of the detection range of aerial 23. Radio-frequency marking 60 cannot therefore also be detected by aerial 25.

Radio-frequency detection device 30 has a connection 37, which is connected to a first connection of aerial 27. A second connection of aerial 27 is connected to a connection 41, which is connected to the common potential of radio-frequency detection system 20. Connection 37 is connected to connection 34 by means of compensating element 47. Connection 35 is connected to connection 37 by means of compensating element 49.

A radio-frequency current generated by transmitter 26 can flow at least partially via connection 34 and via compensating element 47 and also via connection 37 through aerial 27 and can weaken or suppress there a part of the magnetic near field generated by aerial 23, a field line 53 of which is represented by way of example.

A radio-frequency marking 62, which is located in the detection range of aerial 27, is also represented. In the case of an active aerial 25, a field line 55 of the magnetic near field generated by aerial 25 runs through the detection range of aerial 27. A radio-frequency current generated by transmitter 28 can send, for compensation of the magnetic near field of aerial 25 in the range of aerial 27, a radio-frequency current via connection 35, compensating element 49 and connection 37 across aerial 27 and can thus weaken or suppress the magnetic near field of aerial 25 in the range of aerial 27.

An aerial can act as an active or as a passive aerial in a radio-frequency detection system in the manner described above. An embodiment of a radio-frequency detection system wherein a plurality of aerials or all the aerials are active is also conceivable.

**Claims**

1. A radio-frequency detection system (1, 20) with at least two radio-frequency detection devices (2, 4), which each have an aerial (L1, L2) with a detection range for a radio-frequency marking (60, 61) and are designed to detect the radio-frequency marking (60, 61) and marking information made available by the latter in the detection range; the system **characterized in that:**

   the radio-frequency detection-system (1, 20) is arranged-to-weaken a detection range of a detecting radio-frequency detection device (2, 22) in the detection range of the at least one other radio-frequency detection device (4, 24) in such a way that the radio-frequency marking (61) cannot be detected by the detecting radio-frequency detection device (2, 22) in the detection range of the at least one other radio-frequency detection device (4, 24), and in which the radio-frequency detection system (1, 20) has a compensating element (L3, 45, 47, 49) which is connected to the at least one other aerial (L2, 25) and is arranged to feed a compensating current (i3) into the at least one other aerial (L2, 25) and thus to generate a magnetic opposing field by means of the at least one other aerial (L2, 25) in the at least one other detection range, which magnetic opposing field weakens or suppresses the magnetic field (51) of the detecting aerial in the at least one other detection range.

2. The radio-frequency detection system according to claim 1, in which the compensating element (L3, 45) comprises a compensating inductor and first connections (13, 15) of the aerials (L1, L2) of the radio-frequency detection devices (2, 4) are connected by means of the compensating element (L3) and second connections of the aerials (9, 11) each have the same potential and the compensating element (L3) is arranged to weaken or compensate for a magnetic flux generated by the detecting aerial (L1) in the range of the at least one other aerial (L2) by a current generating a magnetic flux in the opposite direction.

3. The radio-frequency detection system according to any one of the preceding claims, in which the compensating element (L3, 45, 47, 49) is arranged to generate a self-induced voltage directed opposite to a mutually induced voltage generated in the other aerial, in such a way that the self-induced voltage and the mutually induced voltage at least partially eliminate one another.

4. The radio-frequency detection system according to any one of the preceding claims, in which the compensating element is designed in such a way that a voltage characteristic of a voltage dropping over the compensating element (L3, 45, 47, 49) and a voltage dropping over the detecting aerial are identical to one another in terms of quantity and phase.

5. The radio-frequency detection system according to any one of the preceding claims, in which the compensating element comprises a compensating capacitor.

6. The radio-frequency detection system according to claim 1, in which the compensating element (L3, 45, 47, 49) is arranged to generate a counter-voltage with a voltage characteristic in phase opposition to a voltage characteristic of a voltage dropping over the detecting aerial.

7. The radio-frequency detection system according to claim 6, in which the compensating element comprises an amplifier which is connected at the input side to the detecting aerial and at the output side to the at least one other aerial and is arranged to generate a compensating current in phase opposition to the current of the detecting aerial.

8. A method for diminishing a detection range in a detection system, wherein a detecting aerial with an active detection range and at least one other aerial with a passive detection range are coupled with one another inductively in particular by cross-talk, so that the active detection range is extended into the passive detection range in which the active detection range extended into the passive detection range is actively weakened or suppressed in the passive detection range in such a way that a marking arranged in the region of the passive detection range cannot be detected by the detecting aerial with the active detection range.

9. The method according to claim 8, in which the active detection range is formed by a magnetic field and the active detection range is weakened or suppressed in the region of the passive detection range by a magnetic field in the opposite direction to said magnetic field.

10. The method according to claim 9, in which a compensating current is fed into the other aerial, by means of which compensating current a magnetic field at least partially compensating for the magnetic near field of the detecting aerial is generated.

**Patentansprüche**

1. Funkfrequenzerkennungssystem (1, 20) mit wenigstens zwei Funkfrequenzerkennungsvorrichtungen (2, 4), welche jeweils eine Antenne (L1, L2) mit einem Erkennungsbereich für eine Funkfrequenzmarkierung (60, 61) haben und dafür ausgelegt sind, die Funkfrequenzmarkierung (60, 61) und die durch die letztere in dem Erkennungsbereich verfügbar gemachte Markierungsinformation zu erkennen; wobei das System **dadurch gekennzeichnet ist, dass:**

das Funkfrequenzerkennungssystem (1, 20) dafür eingerichtet ist, einen Erkennungsbereich einer erkennenden Funkfrequenzerkennungsvorrichtung (2, 22) in dem Erkennungsbereich der wenigstens einen weiteren Funkfrequenzerkennungsvorrichtung (4, 24) in einer solchen Weise abzuschwächen, dass die Funkfrequenzmarkierung (61) durch die erkennende Funkfrequenzerkennungsvorrichtung (2, 22) in dem Erkennungsbereich der wenigstens einen weiteren Funkfrequenzerkennungsvorrichtung (4, 24) nicht detektiert werden kann, und in welchem das Funkfrequenzerkennungssystem (1, 20) ein kompensierendes Element (L3, 45, 44, 49) besitzt, welches mit der wenigstens einen weiteren Antenne (L2, 25) verbunden und dafür eingerichtet ist, einen kompensierenden Strom (i3) in die wenigstens eine weitere Antenne (L2, 25) einzuspeisen und somit ein magnetisches Gegenfeld mittels der wenigstens einen weiteren Antenne (L2, 25) in dem wenigstens einen weiteren Erkennungsbereich zu erzeugen, wobei das magnetische Gegenfeld das Magnetfeld (51) der erkennenden Antenne in dem wenigstens einen weiteren Erkennungsbereich schwächt oder unterdrückt.

2. Funkfrequenzerkennungssystem nach Anspruch 1, in welchem das kompensierende Element (L3, 45) einen kompensierenden Induktor aufweist und erste Verbindungen (13, 15) der Antennen (L1, L2) der Funkfrequenzerkennungsvorrichtungen (2, 4) mittels des kompensierenden Elementes (L3) verbunden sind und zweite Verbindungen der Antennen (9, 11) jeweils dasselbe Potential haben und das kompensierende Element (L3) dafür eingerichtet ist, einen von der erkennenden Antenne (L1) erzeugten magnetischen Fluss in dem Bereich der wenigstens einen weiteren Antenne (L2) durch einen einen magnetischen Fluss in der entgegengesetzten Richtung erzeugenden Strom zu schwächen oder zu kompensieren.

3. Funkfrequenzerkennungssystem nach einem der vorstehenden Ansprüche, in welchem das kompensierende Element (L3, 45, 47, 49) dafür eingerichtet ist, eine selbstinduzierte Spannung entgegengesetzt gerichtet zu einer in der weiteren Antenne erzeugten wechselseitig induzierten Spannung in einer solchen Weise zu erzeugen, dass die selbstinduzierte Spannung und die wechselseitig induzierte Spannung einander wenigstens teilweise eliminieren.

4. Funkfrequenzerkennungssystem nach einem der vorstehenden Ansprüche, in welchem das kompensierende Element in einer solchen Weise ausgelegt ist, dass eine Spannungseigenschaft einer über dem kompensierenden Element (L3, 45, 47, 49) abfallenden Spannung und einer über der erkennenden Antenne abfallenden Spannung hinsichtlich Größe und Phase miteinander identisch sind.

5. Funkfrequenzerkennungssystem nach einem der vorstehenden Ansprüche, in welchem das kompensierende Element einen kompensierenden Kondensator aufweist.

6. Funkfrequenzerkennungssystem nach Anspruch 1, in welchem das kompensierende Element (L3, 45, 47, 49) dafür eingerichtet ist, eine Gegenspannung mit einer Spannungseigenschaft mit entgegengesetzter Phase zu einer Spannungseigenschaft einer über der erkennenden Antenne abfallenden Spannung zu erzeugen.

7. Funkfrequenzerkennungssystem nach Anspruch 6, in welchem das kompensierende Element einen Verstärker aufweist, welcher an der Eingangsseite mit der erkennenden Antenne und an der Ausgangsseite mit der wenigstens einen weiteren Antenne verbunden ist und dafür eingerichtet ist, einen kompensierenden Strom mit entgegengesetzter Phase zu dem Strom der erkennenden Antenne zu erzeugen.

8. Verfahren zum Verringern eines Erkennungsbereiches in einem Erkennungssystem, wobei eine erkennende Antenne mit einem aktiven Erkennungsbereich und wenigstens eine weitere Antenne mit einem passiven Erkennungsbereich miteinander induktiv, insbesondere durch Übersprechen, gekoppelt sind, sodass der aktive Erkennungsbereich in den passiven Erkennungsbereich erweitert wird, in welchem der in den passiven Erkennungsbereich hinein erweiterte aktive Erkennungsbereich in einer solchen Weise aktiv abgeschwächt oder unterdrückt wird, dass eine in dem Gebiet des passiven Erkennungsbereichs angeordnete Markierung durch die erkennende Antenne mit dem aktiven Erkennungsbereich nicht erkannt werden kann.

9. Verfahren nach Anspruch 8, in welchem der aktive Erkennungsbereich von einem magnetischen Feld gebildet wird und der aktive Erkennungsbereich in dem Gebiet des passiven Erkennungsbereichs durch ein Magnetfeld in der entgegengesetzten Richtung zu dem Magnetfeld abgeschwächt oder unterdrückt wird.

10. Verfahren nach Anspruch 9, in welchem ein kompensierender Strom in die weitere Antenne eingespeist wird, wobei mittels des kompensierenden Stroms ein Magnetfeld erzeugt wird, das wenigstens teilweise das magnetische Nahfeld der erkennenden Antenne kompensiert.

## Revendications

1. Système de détection de radio-fréquence (1, 20) avec au moins deux dispositifs de détection de radio-fréquence (2, 4), dont chacun a une antenne (L1, L2) avec une gamme de détection pour un marquage de radio-fréquence (60, 61) et est conçu pour détecter le marquage de radio-fréquence (60, 61) et des informations de marquage rendues disponibles par ce dernier dans la gamme de détection ; le système étant **caractérisé en ce que :**

   le système de détection de radio-fréquence (1, 20) est disposé pour affaiblir une gamme de détection d'un dispositif de détection de radio-fréquence de détection (2, 22) dans la gamme de détection d'au moins un autre dispositif de détection de radio-fréquence (4, 24) de manière à ce que le marquage de radio-fréquence (61) ne puisse pas être détecté par le dispositif de détection de radio-fréquence de détection (2, 22) dans la gamme de détection d'au moins un autre dispositif de détection de radio-fréquence (4, 24), et dans lequel le système de détection de radio-fréquence (1, 20) a un élément de compensation (L3, 45, 47, 49) qui est raccordé à au moins un d'une autre antenne (L2, 25) et est disposé pour fournir un courant de compensation (i3) dans au moins une autre antenne (L2, 25) et donc générer un champ magnétique opposé au moyen d'au moins une autre antenne (L2, 25) dans au moins une autre gamme de détection, lequel champ magnétique opposé affaiblit ou supprime le champ magnétique (51) de l'antenne de détection dans au moins une autre gamme de détection.

2. Système de détection de radio-fréquence selon la revendication 1, dans lequel l'élément de compensation (L3, 45) comprend un inducteur de compensation et des premières connexions (13, 15) des antennes (L1, L2) des dispositifs de détection de radio-fréquence (2, 4) sont raccordées au moyen de l'élément de compensation (L3) et des secondes connexions des antennes (9, 11), chacun a le même potentiel et l'élément de compensation (L3) est disposé pour affaiblir ou compenser un flux magnétique généré par l'antenne de détection (L1) dans la gamme d'au moins une autre antenne (L2) par un courant générant un flux magnétique dans la direction opposée.

**3.** Système de détection de radio-fréquence selon l'une quelconque des revendications précédentes, dans lequel l'élément de compensation (L3, 45, 47, 49) est disposé pour générer une tension auto-induite dirigée de façon opposée à une tension mutuellement induite générée dans l'autre antenne, de manière à ce que la tension auto-induite et la tension induite mutuellement au moins partiellement s'éliminent l'une l'autre.

**4.** Système de détection de radio-fréquence selon l'une quelconque des revendications précédentes, dans lequel l'élément de compensation est conçu de manière à ce qu'une caractéristique de tension d'une tension chutant sur l'élément de compensation (L3, 45, 47, 49) et une tension chutant sur l'antenne de détection sont identiques l'une à l'autre en termes de quantité et de phase.

**5.** Système de détection de radio-fréquence selon l'une quelconque des revendications précédentes, dans lequel l'élément de compensation comprend un condensateur de compensation.

**6.** Système de détection de radio-fréquence selon la revendication 1, dans lequel l'élément de compensation (L3, 45, 47, 49) est disposé pour générer une contre-tension avec une caractéristique de tension en opposition de phase à une caractéristique de tension d'une tension chutant sur l'antenne de détection.

**7.** Système de détection de radio-fréquence selon la revendication 6, dans lequel l'élément de compensation comprend un amplificateur qui est raccordé au côté d'entrée à l'antenne de détection et au côté de sortie d'au moins une autre antenne et est disposé pour générer un courant de compensation en opposition de phase au courant de l'antenne de détection.

**8.** Procédé pour diminuer une gamme de détection dans un système de détection, dans lequel une antenne de détection avec une gamme de détection active et au moins une autre antenne avec une gamme de détection passive sont couplées l'une à l'autre inductivement en particulier par diaphonie, de sorte que la gamme de détection active est étendue dans la gamme de détection passive, dans laquelle la gamme de détection active étendue dans la gamme de détection passive est activement affaiblie ou supprimée dans la gamme de détection passive de manière à ce qu'un marquage disposé dans la région de la gamme de détection active ne peut pas être détecté par l'antenne de détection avec la gamme de détection active.

**9.** Procédé selon la revendication 8, dans lequel la gamme de détection active est formée par un champ magnétique et la gamme de détection active est affaiblie ou supprimée dans la région de la gamme de détection passive par un champ magnétique dans la direction opposée audit champ magnétique.

**10.** Procédé selon la revendication 9, dans lequel un courant de compensation est fourni dans l'autre antenne, au moyen de laquelle un courant de compensation d'un champ magnétique compensant au moins partiellement le champ magnétique proche de l'antenne de détection est généré.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060055542 A
- DE 202005

- DE 202005013779 U1